# EUROPÄISCHE PATENTSCHRIFT

(11) **EP 1 437 247 B1**
(45) Veröffentlichungstag und Bekanntmachung des Hinweises auf die Patenterteilung: **30.03.2005**
(21) Anmeldenummer: 03027908.7
(22) Anmeldetag: 04.12.2003
(51) Int. Cl.: B60J 5/04, B23Q 3/10

(54) **Vorrichtung zur Lagefixierung eines Seitenaufprallträgers während eines Lehren- oder Montageprozesses**
Device for positioning a side impact beam during calibre process or mounting process
Dispositif pour le positionnement d'une poutre de choc latéral pendant un procédé d'étalonnage ou de montage

(30) Priorität: 13.01.2003 DE 10301031
(43) Veröffentlichungstag der Anmeldung: 14.07.2004
(73) Patentinhaber: Benteler Automobiltechnik GmbH, 33104 Paderborn (DE)
(72) Erfinder: Bendler, Jens, 33102 Paderborn (DE); Willam, Marcus, 33154 Salzkotten (DE)
(74) Vertreter: Bockermann, Rolf, Dipl.-Ing.

(56) Entgegenhaltungen:
- EP-A- 0 742 117
- US-A- 3 521 875
- US-A- 3 882 970

## Beschreibung

Die Erfindung betrifft eine Vorrichtung zur Lagefixierung eines im Querschnitt U- bzw. trapezförmigen Seitenaufprallträgers mit wenigstens teilweise abgeflachten Endbereichen während eines Lehren- oder Montageprozesses.

In die Seitenwände, insbesondere in die Türen, von Personenkraftwagen eingegliederte Seitenaufprallträger sind hochrelevante Sicherheitsbauteile, die mit entsprechender Präzision gefertigt und sorgfältig in die Seitenwände oder Türen eingegliedert werden müssen. Da es sich außerdem um Großserienteile handelt, ist es ferner erforderlich, die Seitenaufprallträger im Zuge ihrer Eingliederung permanent auf ihre Maßhaltigkeit überprüfen und die diversen Montageschritte wiederholgenau durchführen zu können.

Zu diesem Zweck ist es bekannt, wie die EP 0 742 117 A1 zeigt, der Anbindung der Seitenaufprallträger im Kraftfahrzeug dienende abgeflachte Endbereiche mit Fixierbohrungen zu versehen, über welche die Seitenaufprallträger während eines Lehren-, Fertigungs- oder Montageprozesses von an die Fixierbohrungen angepassten Aufnahmestiften zentrierend lagefixiert werden. Abgesehen davon, dass aufgrund der Zentrierstifte die während des Lehren-, Fertigungs- oder Montageprozesses eingesetzten Vorrichtungen herstellungstechnisch aufwendig und aufgrund der geforderten Präzision teurer sind, werden die abgeflachten Endbereiche durch die Fixierbohrungen hinsichtlich der Belastungsaufnahme geschwächt, wodurch sich die Spannungsverläufe durch Unterbrechung des Spannungsflusses ungünstig gestalten.

Der Erfindung liegt - ausgehend vom Stand der Technik - die Aufgabe zugrunde, eine Vorrichtung zur Lagefixierung eines Seitenaufprallträgers während eines Lehren- oder Montageprozesses zu schaffen, die unter Berücksichtigung der Massenfertigung dennoch einfach und präzise aufgebaut ist und eine Senkung der Belastungsaufnahme in den abgeflachten Endbereichen der Seitenaufprallträger vermeidet.

Diese Aufgabe wird mit den im Patentanspruch 1 angegebenen Merkmalen gelöst.

Im Rahmen der Erfindung ist es von Bedeutung, dass die abgeflachten Endbereiche der im Querschnitt U- bzw. trapezförmigen Seitenaufprallträger - unabhängig davon, unter welchem Winkel diese Endbereiche zum übrigen Längenverlauf der Seitenaufprallträger angeordnet sind - nicht mehr durch Fixierbohrungen geschwächt werden. Die Seitenaufprallträger werden jetzt sowohl während des Lehren- als auch des Montageprozesses lediglich durch punktuelle Berührungskontakte einwandfrei lagefixiert. Durch den Wegfall von Fixierbohrungen ergeben sich in den Endbereichen signifikante Steigerungen der Belastungsaufnahme, insbesondere im kritischen dynamischen Bereich. Auch stellen sich günstige Spannungsverläufe ein, da der Spannungsfluss in den abgeflachten Endbereichen nicht mehr unterbrochen wird.

Die Seitenaufprallträger werde jetzt lediglich mit ihren Endbereichen auf den neigungsmäßig entsprechend angepassten Auflagekonsolen, insbesondere in Drei-Punkt-Auflage, platziert und danach durch den Auflagekonsolen zugeordnete Vertikalspanner mit Spannbolzen sowie durch neben den Auflagekonsolen liegende Querspanner unter Lageorientierung an einem Längenanschlag einwandfrei lagefixiert.

In dieser Lagefixierung können dann in der Montagelinie der Seitenaufprallträger Messungen sowie Montagemaßnahmen durchgeführt werden. Unabhängig davon, wie die Seitenaufprallträger in der Montagelinie von Bearbeitungsstation zu Bearbeitungsstation transportiert werden, finden sie in allen Bearbeitungsstationen dieselbe Vorrichtung zur Lagefixierung vor.

Die Vertikalspanner bestehen in an sich bekannter Weise aus Kniehebelspannem mit punktuell wirkenden Spannbolzen, über welche die Endbereiche auf den Auflagekonsolen zugeordneten punktuellen Stützbolzen ordnungsgemäß platzert werden. Damit ist die Y-Richtung für die Verspannung gegeben. Die Verspannung in Z-Richtung erfolgt durch Querspanner, die von den Seiten her an neben den Endbereichen liegende Längenabschnitte der Seitenaufprallträger gedrückt und auch wieder von diesen gelöst werden können. Die X-Richtung wird durch einen Längenanschlag für eine Stirnseite eines Endbereichs vorgegeben. Auf diese Weise ist eine stets reproduzierbare Lagefixierung der Seitenaufprallträger im Lehren- oder Montageprozess innerhalb jeder Bearbeitungsstation einer Fertigungslinie sichergestellt.

Eine besonders vorteilhafte Ausführungsform der Erfindung wird in den Merkmalen des Patentanspruchs 2 erblickt. Danach weist jeder Querspanner zwei um parallele horizontale Achsen schwenkbare Winkelhebel mit je einem Vertikalschenkel und einem Horizontalschenkel auf. Die Horizontalschenkel erstrecken sich in entgegengesetzte Richtungen und kontaktieren unter dem Einfluss elastischer Rückstellkräfte um eine gemeinsame Horizontalachse drehbare Exzenter. Durch Drehen der Exzenter können folglich die Winkelhebel gemeinsam verschwenkt und dadurch die Vertikalschenkel seitlich gegen die Seitenaufprallträger gedrückt oder von diesen entfernt werden. Auf diese Weise kann jeder Seitenaufprallträger nach der Positionierung an den Längenanschlag einwandfrei zentrisch positioniert und danach mittels der Vertikalspanner zum Nachmessen und zur Montage örtlich fixiert werden. Vorzugsweise sind hierbei die Kontaktbereiche der Winkelhebel mit dem Seitenaufprallträger einerseits und den Exzentern anderereits punktuell konvex gestaltet.

Es ist nach Patentanspruch 3 zweckmäßig, wenn die elastischen Rückstellkräfte durch auf die Vertikalschenkel der Winkelhebel einwirkende Druckfedern gebildet sind.

Die Erfindung ist nachfolgend anhand eines in den Zeichnungen veranschaulichten Ausführungsbeispiels näher erläutert. Es zeigen:
- Figur 1: im Schema in der Draufsicht eine Vorrichtung zur Lagefixierung eines Seitenaufprallträgers;
- Figur 2: die Vorrichtung der Figur 1 in der Seitenansicht gemäß dem Pfeil II, ebenfalls im Schema;
- Figur 3: in vergrößertem schematischen Maßstab einen Vertikalschnitt durch die Darstellung der Figur 2 entlang der Linie III-III in Richtung der Pfeile IIIa gesehen während einer ersten Betriebssituation und
- Figur 4: die Darstellung der Figur 3 während einer zweiten Betriebssituation.

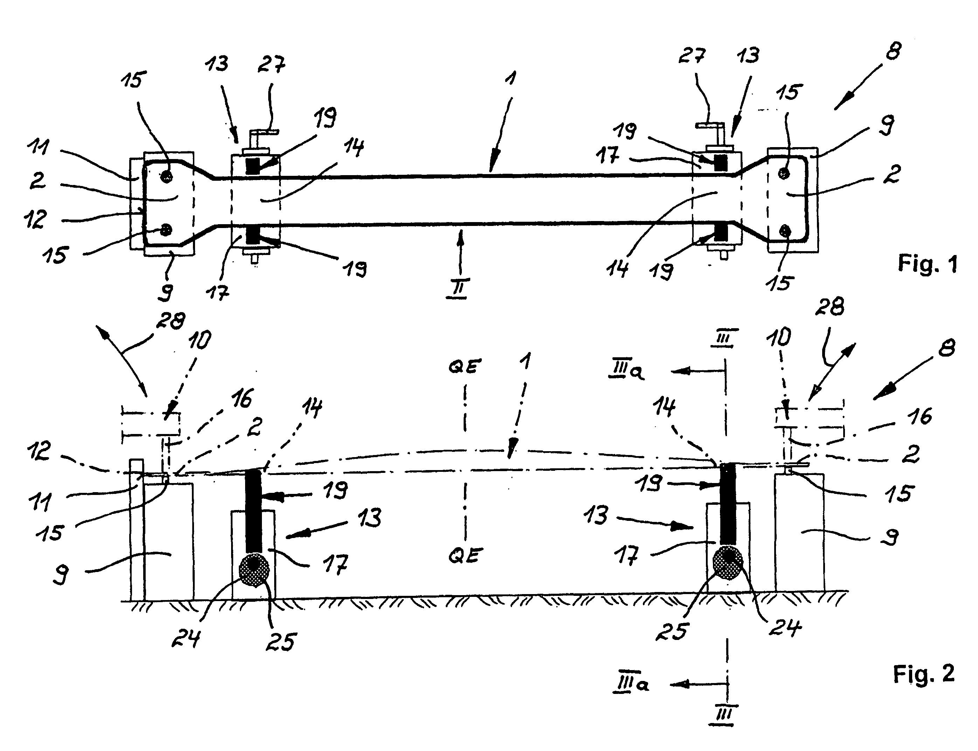

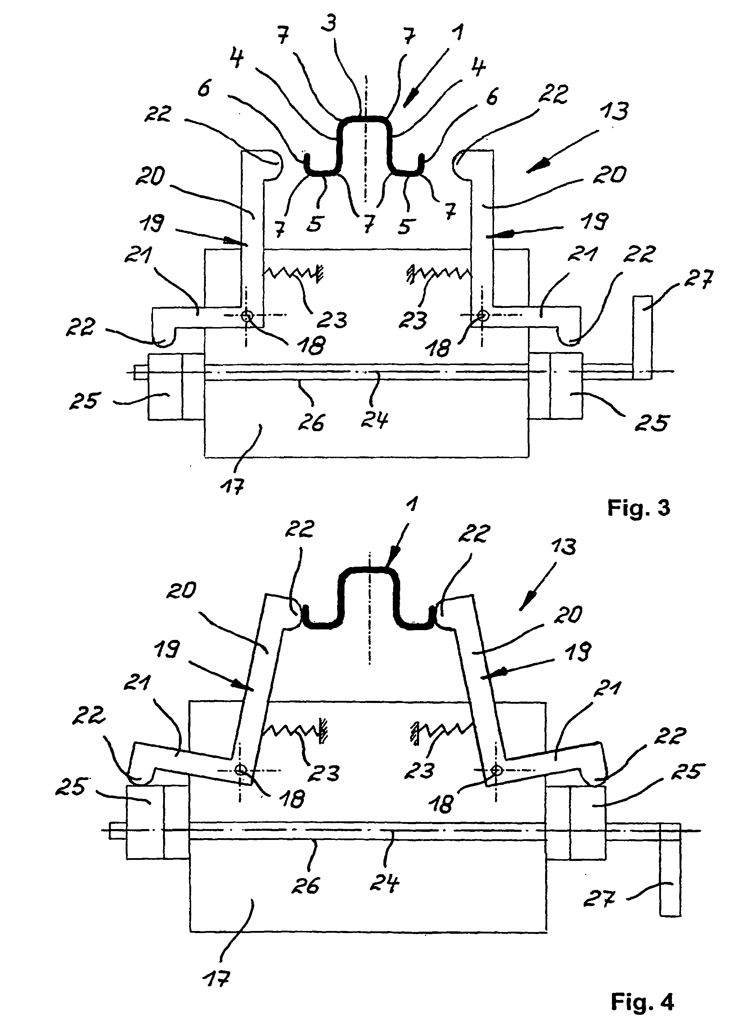

Mit 1 ist in den Figuren 1 bis 4 im Schema ein Seitenaufprallträger zur Eingliederung in die Tür eines Personenkraftfahrzeugs bezeichnet. Der Seitenaufprallträger 1 hat abgeflachte Endbereiche 2 und besitzt zwischen den Endbereichen 2 einen etwa U-förmigen Querschnitt, wie er aus den Figuren 3 und 4 hervorgeht. Dieser Querschnitt umfasst einen Steg 3, zwei Schenkel 4, zwei Flansche 5 und randseitige Abkantungen 6. Alle diese Bereiche 3-6 sind durch bogenförmige Übergänge 7 miteinander verbunden. In Längsrichtung weist der Seitenaufprallträger eine Konfiguration auf (Figur 2), die in der mittleren vertikalen Querebene QE die größte Höhe hat und welche sich von der Querebene QE aus in der Höhe kontinuierlich zu den Endbereichen 2 hin verringert.

Um einen solchen Seitenaufprallträger 1 innerhalb einer Montagelinie während eines Lehren- oder Montageprozesses stets wiederholbar exakt lagefixieren zu können, ist eine Vorrichtung 8 vorgesehen (Figuren 1-4), die sich aus Auflagekonsolen 9 für die Endbereiche 2 des Seitenaufprallträgers 1, den Auflagekonsolen 9 zugeordnete Vertikalspanner 10, einen Längenanschlag 11 für die Stirnseite 12 eines Endbereichs 2 und zwei Querspanner 13 für neben den Endbereichen 2 liegende Längenabschnitte 14 des Seitenaufprallträgers 1 zusammensetzt. Die Auflagekonsolen 9 besitzen punktuelle Stützbolzen 15, von denen in der Regel drei zum Einsatz gelangen. Diesen Stützbolzen 15 sind die Vertikalspanner 10 mit Spannbolzen 16 zugeordnet. Die Vertikalspanner 10 sind als Kniehebelspanner ausgebildet.

Die Querspanner 13 umfassen jeweils in einem Lagerbock 17 um zueinander parallele horizontale Achsen 18 schwenkbare Winkelhebel 19 (Figuren 3 und 4). Jeder Winkelhebel 19 weist einen Vertikalschenkel 20 und einen Horizontalschenkel 21 auf. Die freien Enden 22 der Vertikalschenkel 20 und Horizontalschenkel 21 sind punktuell konvex gestaltet.

Während die Vertikalschenkel 20 durch Druckfedern 23 beaufschlagt werden, kontaktieren die Horizontalschenkel 21 um eine gemeinsame Horizontalachse 24 drehbare Exzenter 25. Dazu sind die Exzenter 25 auf einer Welle 26 befestigt, die in dem Lagerbock 17 in nicht näher veranschaulichter Weise drehbar gelagert ist. Zur Verdrehung der Welle 26 dient ein Handhebel 27 an einem Ende der Welle 26.

Zur Lagefixierung eines Seitenaufprallträgers 1 in einer Bearbeitungsstation einer Montagelinie wird dieser zunächst mit den Endbereichen 2 auf die Stützbolzen 15 der Auflagekonsolen 9 gelegt und zwischen den Vertikalschenkeln 20 der Winkelhebel 19 so verlagert, dass die Stirnseite 12 des einen Endbereichs 2 an dem Längenanschlag 11 zur Anlage gelangt. Nunmehr werden die Wellen 26 in den Lagerböcken 17 gedreht, wodurch die Winkelhebel 19 mittels der Exzenter 25 aus der Position gemäß Figur 3 in die Position gemäß Figur 4 verschwenkt werden und auf diese Weise den Seitenaufprallträger 1 in Z-Richtung zentrisch orientieren. Danach werden die Vertikalspanner 10 entsprechend den Doppelpfeilen 28 der Figur 2 so abwärts verlagert, dass ihre Spannbolzen 16 mit den punktuellen Stützbolzen 15 an den Auflagekonsolen 9 axial ausgerichtet werden und dadurch die Endbereiche 2 einwandfrei lagefixieren. Die jeweilige Bearbeitung kann dann durchgeführt werden.

### Bezugszeichenaufstellung:

- 1 -: Seitenaufprallträger
- 2 -: Endbereiche von 1
- 3 -: Steg von 1
- 4 -: Schenkel von 1
- 5 -: Flansche von 1
- 6 -: Abkantungen von 1
- 7 -: Übergänge
- 8 -: Vorrichtung
- 9 -: Auflagekonsolen
- 10 -: Vertikalspanner
- 11 -: Längenanschlag
- 12 -: Stirnseite von 2
- 13 -: Querspanner
- 14 -: Längenabschnitte von 1
- 15 -: Stützbolzen auf 9
- 16-: Spannbolzen
- 17 -: Lagerbock
- 18 -: Achsen
- 19 -: Winkelhebel
- 20 -: Vertikalschenkel von 19
- 21 -: Horizontalschenkel von 19
- 22 -: Enden von 20 und 21
- 23 -: Druckfedern
- 24 -: Horizontalachse
- 25 -: Exzenter
- 26 -: Welle für 25
- 27 -: Handhebel an 26
- 28 -: Doppelpfeile

- QE -: Querebene von 1

## Patentansprüche

1. Vorrichtung zur Lagefixierung eines im Querschnitt U- bzw. trapezförmigen Seitenaufprallträgers (1) mit wenigstens teilweise abgeflachten Endbereichen (2) während eines Lehren- oder Montageprozesses, welche zwei Auflagekonsolen (9) für die Endbereiche (2) sowie den Auflagekonsolen (9) zugeordnete Vertikalspanner (10), einen Längenanschlag (11) für die Stirnseite (12) eines Endbereichs (2) und zwei Querspanner (13) für neben den Endbereichen (2) liegende Längenabschnitte (14) des Seitenaufprallträgers (1 ) aufweist.

2. Vorrichtung nach Patentanspruch 1, bei welcher jeder Querspanner (13) zwei um zueinander parallele horizontale Achsen (18) schwenkbare Winkelhebel (19) mit je einem Vertikalschenkel (20) und einem Horizontalschenkel (21) aufweist, von denen die sich in entgegengesetzte Richtungen erstreckenden Horizontalschenkel (21) unter dem Einfluss elastischer Rückstellkräfte (23) um eine gemeinsame Horizontalachse (24) drehbare Exzenter (25) kontaktieren.

3. Vorrichtung nach Patentanspruch 2, bei welcher die elastischen Rückstellkräfte (23) durch auf die Vertikalschenkel (20) der Winkelhebel (19) einwirkende Druckfedern gebildet sind.

## Claims

1. Apparatus for fixing the position of a side impact member (1) of U-shaped or trapezoidal cross-section, with at least partially flattened end zones (2) during a calibration or mounting process, comprising two support brackets (9) for the end zones (2) and vertical tensioners (10) associated with the support brackets (9), a longitudinal abutment (11) for the end face (12) of an end zone (2) and two transverse tensioners (13) for longitudinal sections (14) of the side impact member (1) situated next to the end zones (2).

2. Apparatus according to claim 1, wherein each transverse tensioner (13) comprises two angle levers (19) which are pivotable about parallel horizontal axes (18) and which each have a vertical limb (20) and a horizontal limb (21), of which the horizontal limbs (21) extending in opposite directions contact eccentrics (25) rotatable about a common horizontal axis (24) under the influence of elastic restoring forces (23).

3. Apparatus according to claim 2, wherein the elastic restoring forces (23) are formed by compression springs acting on the vertical limbs (20) of the angle levers (19).

## Revendications

1. Dispositif pour, au cours d'un procédé de calibrage ou de montage, la fixation en position d'une poutre de choc latéral (1) à section transversale en forme de trapèze ou en forme de U, avec des zones d'extrémité au moins partiellement aplaties (2), qui présente deux consoles d'appui (9) pour les zones d'extrémité (2), ainsi que les tendeurs verticaux (10) affectés aux consoles d'appui (9), une butée longitudinale (11) pour le côté frontal (12) d'une zone d'extrémité (2) et deux tendeurs transversaux (13) pour les sections longitudinales (14) de la poutre de choc latéral situées à proximité des zones d'extrémité (2).

2. Dispositif selon la revendication 1, dans lequel chaque élément tendeur transversal (13) comporte deux leviers angulaires (19) pouvant basculer autour d'axes horizontaux (18) parallèles entre eux avec respectivement une branche verticale (20) et une branche horizontale (21), à partir desquels les branches horizontales (21) s'étendant dans des directions opposées entrent en contact, sous l'influence de forces de rappel élastiques (23), avec un excentrique (25) pouvant tourner autour d'un axe horizontal commun (24).

3. Dispositif selon la revendication 2, dans lequel les forces de rappel élastiques (23) sont produites par des ressorts de compression agissant sur la branche verticale (20) du levier angulaire (19).
